# EUROPEAN PATENT SPECIFICATION

(11) **EP 4 527 880 B1**
(45) Date of publication and mention of the grant of the patent: **21.01.2026**
(21) Application number: 24190360.8
(22) Date of filing: 23.07.2024
(51) Int. Cl.: C08K 3/34, C08L 83/04

(54) **THERMALLY CONDUCTIVE SILICONE COMPOSITION**
WÄRMELEITFÄHIGE SILIKONZUSAMMENSETZUNG
COMPOSITION DE SILICONE THERMOCONDUCTRICE

(30) Priority: 20.09.2023 JP 2023153110; 30.04.2024 JP 2024073852
(43) Date of publication of application: 26.03.2025
(73) Proprietor: Momentive Performance Materials Japan LLC, Tokyo 107-6119 (JP)
(72) Inventor: MIYATA, Koji, Minato-ku, Tokyo, 107-6119 (JP); TAKAHASHI, Hideo, Minato-ku, Tokyo, 107-6119 (JP); HOSHINO, Chisato, Minato-ku, Tokyo, 107-6119 (JP)
(74) Representative: Müller-Boré & Partner Patentanwälte PartG mbB

(56) References cited:
- EP-B1- 3 372 630
- JP-A- 2017 088 685
- US-A1- 2022 073 746

## Description

### Field of the Invention

The present invention relates to a thermally conductive silicone composition.

### Background Art

Recently, as electronic parts, such as a power module and a CPU, are increasingly improved in performance and reduced in size, thermal management is needed. The thermal management uses a thermally conductive grease and a radiator sheet. The thermally conductive grease has problems in that a so-called pumping out occurs in which a heat generating element and a heat exchanger suffer thermal expansion and shrinkage to push the thermally conductive grease out of the portion to which the grease is applied, and in that separation of the filler and oil in the grease is caused due to a change of them with the passage of time, and thus the thermally conductive grease must be further improved in view of the reliability and function. On the other hand, the radiator sheet is a formed article and hence does not have the above-mentioned problems, but there is a concern about radiator properties of the radiator sheet having an increased thickness from the viewpoint of the heat resistance and contact resistance.

As a method for solving the problems, there has been proposed a technique using a large particle-diameter inorganic filler or two or more types of inorganic fillers in a composition containing a thermally conductive filler and silicone in order to improve the thermal conductivity. For example, patent document 1 discloses a thermally conductive polysiloxane composition using silicon carbide having at least two peaks of the particle size distribution.

### PRIOR ART REFERENCE

### Patent Document

Patent document 1: Japanese Patent Application Kokai Publication No. 2017-88685

### Summary of the Invention

### Problems to be Solved by the Invention

With respect to the radiator material, taking the heat resistance into consideration, applying the material with a reduced thickness is an important factor. BLT (Bond-Line-Thickness) is a thinness index for the material applied. The thickness of the radiator material largely affects the radiator properties, and a reduction of the thickness contributes to a lowering of the heat resistance of the radiator material, and therefore the BLT properties are important to achieve a high radiator material.

Further, the present inventors have found that the thermally conductive polysiloxane composition described in patent document 1 can be further improved with respect to the electrical insulating properties, BLT properties, discharge properties, and radiator properties.

An object of the present invention is to provide a thermally conductive silicone composition which not only has excellent electrical insulating properties, discharge properties, and radiator properties but also has low BLT.

### Means for Solving the Problems

The present invention is directed to the following [1] to [6].
[1] A thermally conductive silicone composition comprising:
   (A) a polyorganosiloxane having an alkenyl group bonded to a silicon atom;
   (B) a polyorganohydrogensiloxane having a hydrogen atom bonded to a silicon atom;
   (C) a Pt catalyst;
   (D) a siloxane compound represented by the following general formula (1): 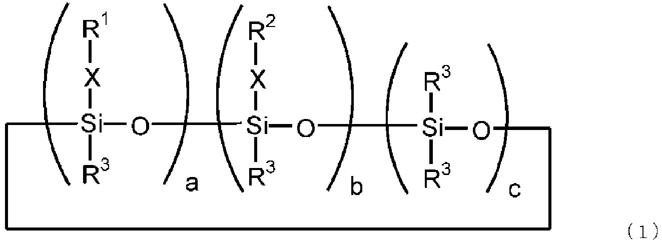
      wherein R¹ is a group having an alkoxysilyl group having 1 to 4 carbon atoms,
         R² is a linear organosiloxy group represented by the following general formula (2): 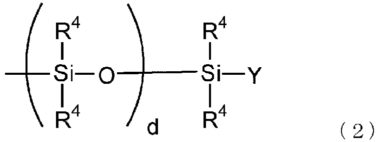
      wherein each R⁴ is independently a monovalent hydrocarbon group having 1 to 12 carbon atoms, Y is a group selected from the group consisting of R⁴ and an aliphatic unsaturated group, and d is an integer of 2 to 60,
         each X is independently a divalent hydrocarbon group having 2 to 10 carbon atoms,
         each of a and b is independently an integer of 1 or more,
         c is an integer of 0 or more,
         wherein a + b + c is an integer of 4 or more, and
         each R³ is independently a monovalent hydrocarbon group having 1 to 6 carbon atoms or a hydrogen atom;
            and
   (E) a thermally conductive filler,
      wherein the component (A) comprises (A-1) a polyorganosiloxane having in the molecule thereof two or more alkenyl groups bonded to a silicon atom,
      wherein the component (B) comprises (B-1) a polyorganohydrogensiloxane having in the molecule thereof two or more hydrogen atoms bonded to a silicon atom,
      wherein the component (E) comprises:
         (E-1) a silicon carbide having a peak of the particle size distribution in the range of from 10 to 40 µm,
         (E-2) a first thermally conductive filler having a thermal conductivity of 10 to 300 W/mK and having a peak of the particle size distribution in the range of from 0.1 to 1.0 µm,
         (E-3) a second thermally conductive filler having a thermal conductivity of 10 to 300 W/mK and having a peak of the particle size distribution in the range of from more than 1.0 to less than 10 µm, and
         (E-4) a third thermally conductive filler (exclusive of silicon carbide) having a thermal conductivity of 60 to 300 W/mK and having a peak of the particle size distribution in the range of from 10 to 40 µm,
         wherein the total amount of the components (A) to (D) is 1.0 to 10.0 parts by mass, based on 100 parts by mass of the component (E), and
         wherein the amount of the component (E-2) is 28.0 parts by mass or less, based on 100 parts by mass of the component (E).
[2] The thermally conductive silicone composition according to item [1], wherein the component (E-2) is at least one member selected from the group consisting of alumina, aluminum nitride, aluminum hydroxide, magnesium oxide, zinc oxide, crystalline silica, aluminum, boron nitride, and graphitized carbon,
   the component (E-3) is at least one member selected from the group consisting of alumina, aluminum nitride, aluminum hydroxide, magnesium oxide, zinc oxide, crystalline silica, aluminum, boron nitride, and graphitized carbon, and
   the component (E-4) is at least one member selected from the group consisting of aluminum nitride, boron nitride, and graphitized carbon.
[3] The thermally conductive silicone composition according to item [1] or [2], further comprising at least one member selected from the group consisting of (A-2) a polyorganosiloxane having in the molecule thereof one alkenyl group bonded to a silicon atom and (B-2) a polyorganohydrogensiloxane having in the molecule thereof one hydrogen atom bonded to a silicon atom.
[4] The thermally conductive silicone composition according to any one of items [1] to [3], wherein, based on 100 parts by mass of the component (E),
   the amount of the component (E-1) is 5.0 to 30.0 parts by mass,
   the amount of the component (E-2) is 10.0 to 28.0 parts by mass,
   the amount of the component (E-3) is 15.0 to 40.0 parts by mass, and
   the amount of the component (E-4) is 5.0 to 40.0 parts by mass.
[5] A cured product which is obtained by curing the thermally conductive silicone composition according to any one of items [1] to [4]
[6] An electronic part comprising the thermally conductive silicone composition according to any one of items [1] to [4].

### Effects of the Invention

In the present invention, there can be provided a thermally conductive silicone composition which not only has excellent electrical insulating properties, discharge properties, and radiator properties but also has low BLT.

### MODE FOR CARRYING OUT THE INVENTION

### [Definition of the terms]

The structural units of a siloxane compound are frequently indicated using the abbreviations shown below (hereinafter, these structural units are frequently respectively referred to as, for example, "M unit" and "D^{H} unit").

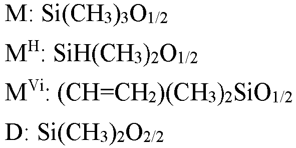

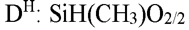

In the present specification, specific examples of groups (substituents) are as described below.

Examples of monovalent hydrocarbon groups include an alkyl group, a cycloalkyl group, an aryl group, an aralkyl group, and an alkenyl group. Examples of monovalent hydrocarbon groups having no aliphatic unsaturated bond include the above-mentioned monovalent hydrocarbon groups except the alkenyl group.

An alkenyl group is a linear or branched group having 2 to 6 carbon atoms, and examples include a vinyl group, an allyl group, a 3-butenyl group, and a 5-hexenyl group.

An alkyl group is a linear or branched group having 1 to 18 carbon atoms, and examples include a methyl group, an ethyl group, a propyl group, a butyl group, a pentyl group, a hexyl group, an octyl group, a decyl group, a dodecyl group, a hexadecyl group, and an octadecyl group.

A cycloalkyl group is a monocyclic or polycyclic group having 3 to 20 carbon atoms, and examples include a cyclopentyl group and a cyclohexyl group.

An aryl group is an aromatic group containing a monocyclic or polycyclic group having 6 to 20 carbon atoms, and examples include a phenyl group and a naphthyl group.

An aralkyl group is an alkyl group substituted with an aryl group, and examples include a 2-phenylethyl group and a 2-phenylpropyl group.

An alkylene group is a linear or branched group having 1 to 18 carbon atoms, and examples include a methylene group, an ethylene group, a trimethylene group, a 2-methylethylene group, and a tetramethylene group.

The alkenyl group, alkyl group, cycloalkyl group, aryl group, aralkyl group, and alkylene group may be substituted with a halogen, such as chlorine, fluorine, or bromine; or a cyano group. Examples of the above groups substituted with a halogen include a chloromethyl group, a chlorophenyl group, and a 3,3,3-trifluoropropyl group, and examples of the above groups substituted with a cyano group include a 2-cyanoethyl group.

In the present specification, "(A) polyorganosiloxane having an alkenyl group bonded to a silicon atom" is frequently referred to as "component (A)". This applies to "(C) Pt catalyst " and other components.

### [Thermally conductive silicone composition]

The thermally conductive silicone composition (hereinafter, frequently referred to simply as "the composition") is a thermally conductive silicone composition which comprises:
(A) a polyorganosiloxane having an alkenyl group bonded to a silicon atom;
(B) a polyorganohydrogensiloxane having a hydrogen atom bonded to a silicon atom;
(C) a Pt catalyst;
(D) a siloxane compound represented by the following general formula (1): 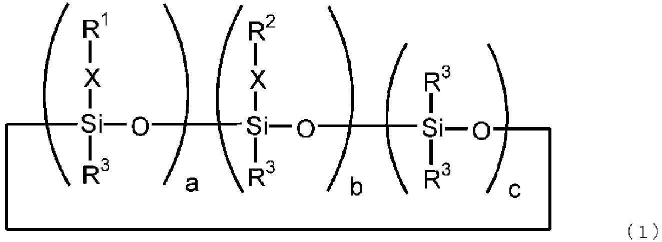 wherein R¹ is a group having an alkoxysilyl group having 1 to 4 carbon atoms,
   R² is a linear organosiloxy group represented by the following general formula (2): 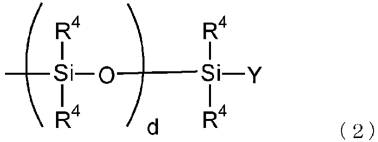 wherein each R⁴ is independently a monovalent hydrocarbon group having 1 to 12 carbon atoms, Y is a group selected from the group consisting of R⁴ and an aliphatic unsaturated group, and d is an integer of 2 to 60,
   each X is independently a divalent hydrocarbon group having 2 to 10 carbon atoms,
   each of a and b is independently an integer of 1 or more,
   c is an integer of 0 or more,
   wherein a + b + c is an integer of 4 or more, and
   each R³ is independently a monovalent hydrocarbon group having 1 to 6 carbon atoms or a hydrogen atom;
      and
(E) a thermally conductive filler,
   wherein the component (A) comprises (A-1) a polyorganosiloxane having in the molecule thereof two or more alkenyl groups bonded to a silicon atom,
   wherein the component (B) comprises (B-1) a polyorganohydrogensiloxane having in the molecule thereof two or more hydrogen atoms bonded to a silicon atom,
   wherein the component (E) comprises:
      (E-1) a silicon carbide having a peak of the particle size distribution in the range of from 10 to 40 µm,
      (E-2) a first thermally conductive filler having a thermal conductivity of 10 to 300 W/mK and having a peak of the particle size distribution in the range of from 0.1 to 1.0 µm,
      (E-3) a second thermally conductive filler having a thermal conductivity of 10 to 300 W/mK and having a peak of the particle size distribution in the range of from more than 1.0 to less than 10 µm, and
      (E-4) a third thermally conductive filler (exclusive of silicon carbide) having a thermal conductivity of 60 to 300 W/mK and having a peak of the particle size distribution in the range of from 10 to 40 µm,
      wherein the total amount of the components (A) to (D) is 1.0 to 10.0 parts by mass, based on 100 parts by mass of the component (E), and
      wherein the amount of the component (E-2) is 28.0 parts by mass or less, based on 100 parts by mass of the component (E).

### <(A) Polyorganosiloxane having an alkenyl group bonded to a silicon atom>

Polyorganosiloxane (A) having an alkenyl group bonded to a silicon atom is a component that serves as a base polymer in the composition. Component (A) comprises (A-1) a polyorganosiloxane having in the molecule thereof two or more alkenyl groups bonded to a silicon atom.

### «(A-1) Polyorganosiloxane having in the molecule thereof two or more alkenyl groups bonded to a silicon atom»

Component (A-1) is a polyorganosiloxane having in the molecule thereof two or more alkenyl groups bonded to a silicon atom. The alkenyl group of component (A-1) and the hydrosilyl group (Si-H group) of component (B-1) undergo an addition reaction to form a network structure in a cured product of the composition.

With respect to component (A-1), there is no particular limitation as long as component (A-1) and component (B-1) can together form the above-mentioned network structure. Component (A-1) typically has in the molecule thereof two or more alkenyl group-containing siloxane units represented by the following general formula (I):

(R¹¹)ₐ₁(R¹²)_{b1}SiO_{(4-a1-b1)2} (I)

wherein:
R¹¹ is an alkenyl group;
R¹² is a monovalent hydrocarbon group having no aliphatic unsaturated bond;
a1 is an integer of 1 to 3; and
b1 is an integer of 0 to 2, with the proviso that a1 + b1 is 1 to 3.
The number of the alkenyl groups bonded to a silicon atom in component (A-1) is preferably 2 to 100 per molecule, more preferably 2 to 50.

R¹¹ is preferably a vinyl group in view of easy synthesis of the compound and no adverse effect on the fluidity of the composition before being cured and heat resistance of the composition after cured. a is preferably 1 in view of easy synthesis of the compound. In view of easy synthesis of the compound and excellent balance between properties, such as mechanical strength and fluidity of the composition before being cured, R¹² is preferably a methyl group or a phenyl group, especially preferably a methyl group.

As an example of an organic group bonded to the silicon atom of another siloxane unit in component (A-1), there can be mentioned a monovalent hydrocarbon group having no aliphatic unsaturated bond. For the same reasons as those for R¹², the organic group is preferably a methyl group or a phenyl group, especially preferably a methyl group.

R¹¹ may be present either at an end of or in the molecular chain of component (A-1), and may be present both at an end of and in the molecular chain.

The siloxane skeleton of component (A-1) can be linear or branched. Specifically, component (A-1) can be linear polyorganosiloxane (A-1-1) or branched polyorganosiloxane (A-1-2).

As an example of linear polyorganosiloxane (A-1-1), there can be mentioned a linear polyorganosiloxane having both ends capped by an R₃SiO_{1/2} unit and having an intermediate unit comprised only of an R²₂SiO_{2/2} unit, wherein R is R¹¹ or R¹², wherein R¹¹ is an alkenyl group, and R¹² is a monovalent hydrocarbon group having no aliphatic unsaturated bond, and two or more R¹¹'s are contained in the molecule. The R₃SiO_{1/2} unit in component (A-1-1) is preferably an R¹¹R¹²₂SiO_{1/2} unit, an R¹¹₂R¹²SiO_{1/2} unit, or an R¹¹₃SiO_{1/2} unit, especially preferably an R¹¹R¹²₂SiO_{1/2} unit.

Component (A-1) is more preferably a linear polyorganosiloxane having both ends capped by an R¹¹R¹²₂SiO_{1/2} unit and having an intermediate unit comprised only of an R¹²₂SiO_{2/2} unit. Component (A-1-1) is especially preferably a linear polyorganosiloxane represented by M^{vi}DₙM^{vi} (i.e., a linear polyorganosiloxane having both ends capped by an M^{vi} unit (dimethylvinylsiloxane unit) and having an intermediate unit comprised only of a D unit (dimethylsiloxane unit)). In the present specification, the "Dₙ" means that the intermediate unit is comprised only of a D unit, and the "n" means the degree of polymerization of the D unit, and is a value which varies depending on the viscosity of the corresponding polyorganosiloxane.

As an example of branched polyorganosiloxane (A-1-2), there can be mentioned a branched polyorganosiloxane comprising a SiO_{4/2} unit and an R₃SiO_{1/2} unit as essential units and an R₂SiO_{2/2} unit and/or an RSiO_{3/2} unit as an optional unit. In the units, R is R¹¹ or R¹², and, among R's, two or more R's are R¹¹ per molecule. For forming a crosslinking point in a curing reaction, it is preferred that, among R's, at least three R's are R¹¹ per molecule and the remaining R is R¹². From the viewpoint of obtaining a cured product of the composition having excellent mechanical strength, branched polyorganosiloxane (A-1-2) is preferably in such a solid or viscous semisolid resin form at ordinary room temperature that the ratio of the R₃SiO_{1/2} unit and the SiO_{4/2} unit, in terms of a molar ratio, is in the range of from 1:0.8 to 1:3.

In component (A-1-2), R¹¹ may be present as R for the R₃SiO_{1/2} unit, and may be present as R for the R₂SiO unit or RSiO_{3/2} unit. From the viewpoint of achieving rapid curing at room temperature, it is preferred that part of or all of the R₃SiO_{1/2} unit is an R¹¹R¹²₂SiO_{1/2} unit.

### «Component (A) other than component (A-1)»

Component (A) can contain component (A) other than component (A-1) (hereinafter, referred to also as "component (A-2)"). Examples of component (A-2) include a polyorganosiloxane having in the molecule thereof one alkenyl group bonded to a silicon atom. The siloxane skeleton of component (A-2) as well as a preferred aspect thereof are as mentioned above in connection with component (A-1).

Component (A-2) is preferably a linear polyorganosiloxane having in the molecule thereof one alkenyl group bonded to a silicon atom. Component (A-2) is more preferably a linear polyorganosiloxane having one end capped by an R¹¹R¹²₂SiO_{1/2} unit and another end capped by an R¹²₃SiO_{1/2} unit and having an intermediate unit comprised only of an R¹²₂SiO_{2/2} unit. Further, component (A-2) is especially preferably a linear polyorganosiloxane represented by M^{vi}DₙM.

### «Preferred aspect of component (A)»

Component (A) preferably has a viscosity at 23°C of 0.01 to 500 Pa•s, more preferably 0.05 to 300 Pa•s, especially preferably 0.1 to 100 Pa•s. When the viscosity of component (A) is in the above range, the filler and polymer can be easily kneaded in the production process, so that the resultant composition is advantageous in that a final product obtained from the composition has excellent electrical insulating properties, BLT properties, discharge properties, and radiator properties. Further, when the viscosity of component (A) at 23°C is 0.01 Pa•s or more, volatilization of low molecular-weight components is suppressed in the production process, making it possible to efficiently satisfy the properties of the thermally conductive silicone composition. On the other hand, when the viscosity of component (A) at 23°C is 500 Pa•s or less, component (E) and the polymer components (component (A) and component (B)) are well miscible with each other. When component (A) is a combination of two or more types of components, the viscosity of component (A) means the viscosity of the mixed alkenyl group-containing polyorganosiloxanes. In the present specification, the viscosity is a value as measured in accordance with JIS K 6249 using a rotational viscometer under conditions at 23°C such that the spindle number and the speed of rotation are appropriately selected.

Component (A) may be one type of component or a combination of two or more types of components. For example, component (A) may be comprised only of two or more types of components (A-1), and may be a mixture of one or more types of components (A-1) and one or more types of components (A-2).

### <(B) Polyorganohydrogensiloxane having a hydrogen atom bonded to a silicon atom>

(B) Polyorganohydrogensiloxane having a hydrogen atom bonded to a silicon atom comprises (B-1) a polyorganohydrogensiloxane having in the molecule thereof two or more hydrogen atoms bonded to a silicon atom. With respect to component (B), there is no particular limitation as long as component (B) and component (A) can together form the above-mentioned network structure.

### «(B-1) Polyorganohydrogensiloxane having in the molecule thereof two or more hydrogen atoms bonded to a silicon atom»

Component (B-1) serves as a crosslinking agent for component (A). Component (B-1) typically has in the molecule thereof two or more units represented by the following general formula (II):

(R¹³)_{c}H_{d}SiO_{(4-c1-d1)/2} (II)

wherein:
R¹³ represents a monovalent hydrocarbon group having no aliphatic unsaturated bond;
c1 is an integer of 0 to 2; and
d1 is an integer of 1 to 3, with the proviso that c1 + d1 is an integer of 1 to 3.

In view of easy synthesis of the compound, R¹³ is preferably a methyl group. In view of easy synthesis of the compound, d1 is preferably 1.

In view of easy synthesis of the compound, component (B-1) preferably has three or more siloxane units. Further, in view of an advantage that the component does not volatilize even when heated to the curing temperature and has such excellent fluidity that the component is easily mixed with component (A), the number of the siloxane units of component (B-1) is preferably 6 to 200, especially preferably 10 to 150. From the viewpoint of efficiently serving as a crosslinking agent for component (A), component (B-1) preferably has in the molecule thereof three or more units represented by the general formula (II).

The siloxane skeleton in component (B-1) may be linear, branched, or cyclic, and is preferably linear. In component (B-1), the hydrogen atom bonded to a silicon atom may be present either at an end or in an intermediate unit, but is preferably present in an intermediate unit.

Component (B-1) is preferably (B-1-1) a linear polyorganohydrogensiloxane having both ends independently capped by an R¹⁴₃SiO_{1/2} unit and having an intermediate unit comprised only of an R¹⁴₂SiO_{2/2} unit, and (B-1-2) a polyorganohydrogensiloxane comprised only of an R¹⁴₃SiO_{1/2} unit and a SiO_{4/2} unit (wherein each R¹⁴ is independently a hydrogen atom or a monovalent hydrocarbon group having no aliphatic unsaturated bond, with the proviso that at least three of R¹⁴'s are a hydrogen atom).

In component (B-1-1) and component (B-1-2), examples of R¹⁴₃SiO_{1/2} units include an HR¹⁵₂SiO_{1/2} unit and an R¹⁵₃SiO_{1/2} unit, and examples of R¹⁴₂SiO_{2/2} units include an HR¹⁵SiO_{2/2} unit and an R¹⁵₂SiO_{2/2} unit (wherein R¹⁵ is a monovalent hydrocarbon group having no aliphatic unsaturated bond).

Component (B-1) is especially preferably a linear polyorganohydrogensiloxane having both ends capped by an M^{H} unit (dimethylhydrogensiloxane unit) and having an intermediate unit comprised only of a D unit (dimethylsiloxane unit) and a D^{H} unit (dimethylsiloxane unit), and a linear polyorganohydrogensiloxane having both ends capped by an M^{H} unit (dimethylhydrogensiloxane unit) and having an intermediate unit comprised only of a D unit (dimethylsiloxane unit).

### «Polyorganohydrogensiloxane other than component (B-1)»

Component (B) can contain component (B) other than component (B-1) (hereinafter, referred to also as "component (B-2)"). As an example of component (B-2), there can be mentioned a polyorganohydrogensiloxane having in the molecule thereof one hydrogen atom bonded to a silicon atom. The siloxane skeleton in component (B-2) may be linear, branched, or cyclic, and is preferably linear. Further, in component (B-2), the hydrogen atom bonded to a silicon atom may be present either at an end or in an intermediate unit.

Component (B-2) is especially preferably a linear polyorganohydrogensiloxane represented by M^{H}DₙM.

### «Preferred aspect of component (B)»

Component (B) preferably has a viscosity at 23°C of 0.01 to 500 mPa•s, more preferably 1 to 300 mPa•s, especially preferably 5 to 100 mPa•s. When the viscosity of component (B) is in the above range, component (E) and the polymer components (component (A) and component (B)) can be easily kneaded in the production process, so that the composition having more excellent electrical insulating properties, BLT properties, discharge properties, and radiator properties can be obtained. The viscosity is as mentioned above in connection with component (A).

Component (B) may be one type of component or a combination of two or more types of components. For example, component (B) may be comprised only of two or more types of components (B-1), and may be a mixture of one or more types of components (B-1) and one or more types of components (B-2).

### <Preferred aspect of component (A) and component (B)>

From the viewpoint of the curing properties and heat resistance and from the viewpoint of controlling the hardness of the material, it is preferred that the thermally conductive silicone composition further comprises at least one member selected from the group consisting of (A-2) a polyorganosiloxane having in the molecule thereof one alkenyl group bonded to a silicon atom and (B-2) a polyorganohydrogensiloxane having in the molecule thereof one hydrogen atom bonded to a silicon atom.

### <(C) Pt catalyst >

(C) Pt catalyst is a catalyst for accelerating an addition reaction of the alkenyl group in component (A) and the hydrosilyl group in component (B).

Examples of component (C) include platinum compounds, such as hexachloroplatinic(IV) acid, a reaction product of hexachloroplatinic(IV) acid and an alcohol, a platinum-olefin complex, a platinum-vinylsiloxane complex, a platinumketone complex, and a platinum-phosphine complex. Of these, in view of excellent catalytic activity, a platinum-vinylsiloxane complex is preferred, and, in view of achieving curing at room temperature in a short time, especially preferred is a Karstedt's complex, a platinum-1,1,3,3-tetramethyl-1,3-divinyldisiloxane complex (platinum-methylvinylsiloxane dimer complex), an Ashley complex, or a platinum-2,4,6,8-tetramethyl-2,4,6,8-tetravinylcyclotetrasiloxane complex (platinum-methylvinylsiloxane tetramer complex).

Component (C) may be one type of component or a combination of two or more types of components.

### <(D) Siloxane compound represented by the general formula (1)>

Component (D) is represented by the following general formula (1): 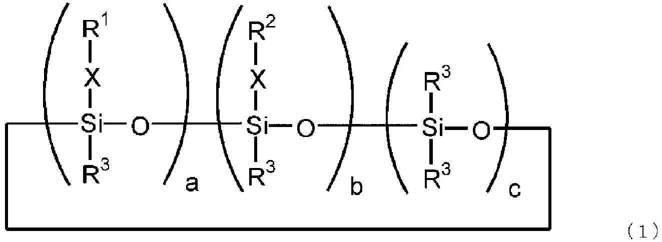 wherein R¹ is a group having an alkoxysilyl group having 1 to 4 carbon atoms,
R² is a linear organosiloxy group represented by the following general formula (2): 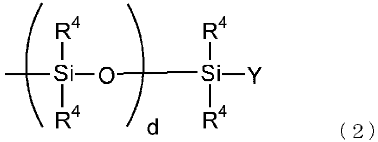 **wherein** each R⁴ is independently a monovalent hydrocarbon group having 1 to 12 carbon atoms, Y is a group selected from the group consisting of R⁴ and an aliphatic unsaturated group, and d is an integer of 2 to 60,
each X is independently a divalent hydrocarbon group having 2 to 10 carbon atoms,
each of a and b is independently an integer of 1 or more,
c is an integer of 0 or more,
wherein a + b + c is an integer of 4 or more, and
each R³ is independently a monovalent hydrocarbon group having 1 to 6 carbon atoms or a hydrogen atom.

In component (D), the unit containing R¹, the unit containing R², and the unit represented by SiR³₂O are not necessarily arranged as shown in the general formula (1) above, and, for example, the unit represented by SiR³₂O may be present between the unit containing R¹ and the unit containing R².

The siloxane compound having the cyclic structure represented by the general formula (1) can have introduced a large number of hydrolysable groups into the cyclic structure, and further has the hydrolysable groups concentrated in the position of the structure, and therefore is considered to have an increased treatment efficiency for component (E), enabling higher filling. In addition, the siloxane compound per se has high heat resistance, and therefore can cause the thermally conductive silicone composition to have high heat resistance. Further, the siloxane compound represented by the general formula (1) has an advantage in that the compound can be easily obtained by subjecting to addition reaction, for example, a cyclic siloxane containing a hydrogen group, a siloxane having a vinyl group at one end, and a silane compound containing a vinyl group and a hydrolysable group.

R¹ is a group having an alkoxysilyl group having 1 to 4 carbon atoms, which is a hydrolysable functional group. R¹ may be directly bonded to X with silicon, but may be bonded through a linking group, such as an ester linkage. R¹ is preferably a group having the following structure.

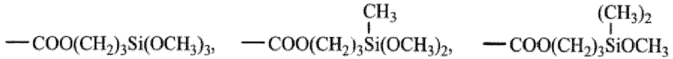

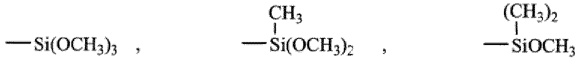

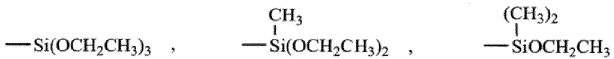

In view of a tendency toward a further improvement of the treatment efficiency for the thermally conductive filler, R¹ is preferably a group of a structure having two or more alkoxysilyl groups, especially having three or more alkoxysilyl groups. Further, in view of easy availability of the raw material, R¹ preferably contains a methoxysilyl group.

R² is a linear organosiloxy group represented by the general formula (2). In the general formula (2), d is an integer of 2 to 60. d is 2 to 60, and therefore the effect on the fluidity is improved, enabling high incorporation, so that the viscosity of the siloxane compound per se can be reduced. Each R⁴ is independently a monovalent hydrocarbon group having 1 to 12 carbon atoms, and examples of R⁴'s include linear or branched C₁₋₁₂ alkyl groups, and aryl groups, such as phenyl and naphthyl. Further, the hydrocarbon group may be substituted with a halogen, such as chlorine, fluorine, or bromine, and examples of such groups include perfluoroalkyl groups, such as a trifluoromethyl group. In view of easy synthesis of the compound, R⁴ is preferably a methyl group. Y is a group selected from the group consisting of R⁴, and an aliphatic unsaturated group. The aliphatic unsaturated group preferably has 2 to 10 carbon atoms, more preferably 2 to 6 carbon atoms. Further, from the viewpoint of facilitating the curing reaction, the aliphatic unsaturated group preferably has a double bond at the end thereof. In view of easy synthesis of the compound, Y is preferably a methyl group or a vinyl group.

R¹ and R² are individually bonded through group X to the cyclic siloxane portion of the siloxane represented by the general formula (1). Group X is a divalent hydrocarbon group having 2 to 10 carbon atoms, and examples of such groups include alkylene groups, such as -CH₂CH₂-, -CH₂CH₂CH₂-, -CH₂CH₂CH₂CH₂CH₂CH₂-, - CH₂CH(CH₃)-, and -CH₂CH(CH₃)CH₂-. In view of easy synthesis of the compound, X is preferably -CH₂CH₂- or -CH₂CH(CH₃)-.

Each R³ is independently a monovalent hydrocarbon group having 1 to 6 carbon atoms or a hydrogen atom. R³'s may be the same or different. R³ is preferably a methyl group or a hydrogen atom in view of easy synthesis of the compound.

a is an integer of 1 or more, preferably 1. b is an integer of 1 or more, preferably 1 or 2. c is an integer of 0 or more, preferably 0 to 2. Further, the total of a + b + c is an integer of 4 or more, and is preferably 4 in view of easy synthesis of the compound.

As specific examples of the siloxane compounds, there can be mentioned compounds represented by the following structural formulae.

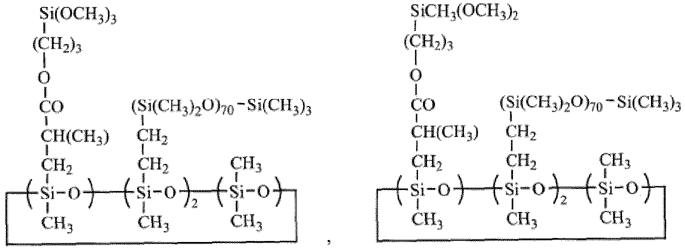

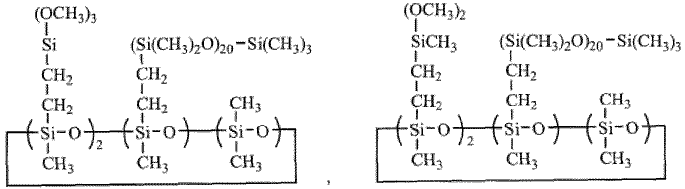

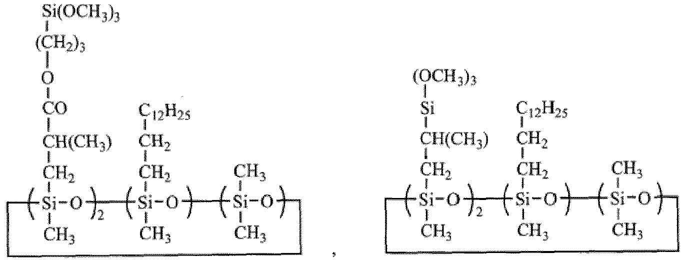

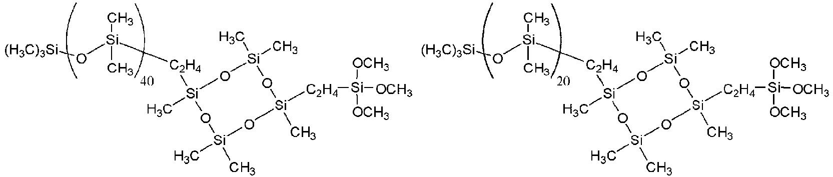

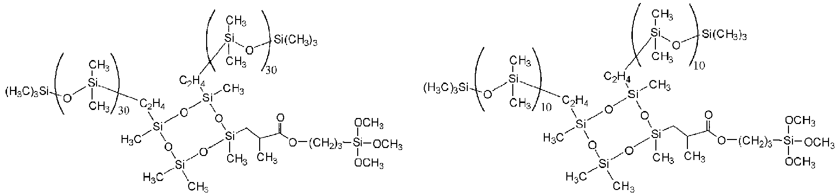

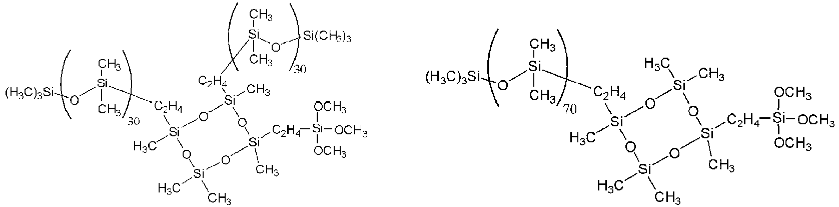

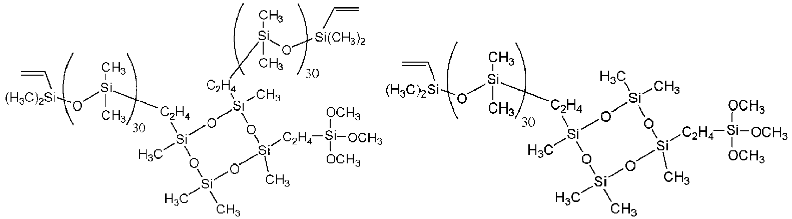

Component (D) may be one type of component or a combination of two or more types of components.

### <(E) Thermally conductive filler>

(E) Thermally conductive filler comprises:
(E-1) a silicon carbide having a peak of the particle size distribution in the range of from 10 to 40 µm,
(E-2) a first thermally conductive filler having a thermal conductivity of 10 to 300 W/mK and having a peak of the particle size distribution in the range of from 0.1 to 1.0 µm,
(E-3) a second thermally conductive filler having a thermal conductivity of 10 to 300 W/mK and having a peak of the particle size distribution in the range of from more than 1.0 to less than 10 µm, and
(E-4) a third thermally conductive filler (exclusive of silicon carbide) having a thermal conductivity of 60 to 300 W/mK and having a peak of the particle size distribution in the range of from 10 to 40 µm.

### «(E-1) Silicon carbide having a peak of the particle size distribution in the range of from 10 to 40 µm»

Component (E-1) is a silicon carbide having a peak of the particle size distribution in the range of from 10 to 40 µm. With respect to the silicon carbide, there is no particular limitation, and any commercially available silicon carbide can be used as long as it is of a grade that can be used as a thermally conductive filler. Examples of commercially available products of silicon carbide include black silicon carbide and green silicon carbide, manufactured by Pacific Rundum Co., Ltd. Further, one which is obtained by very finely pulverizing the above silicon carbide can be used.

When component (E-1) has a monodisperse particle size distribution, the peak of the particle size distribution of the silicon carbide and the average particle diameter have the same meaning. The average particle diameter can be determined, for example, as a weight average value (or median diameter) using a particle size distribution measurement apparatus, for example, by a laser diffraction method.

Component (E-1) preferably has a monodisperse particle size distribution. Further, component (E-1) preferably has a peak of the particle size distribution in the range of from 15 to 35 µm, especially preferably a peak of the particle size distribution in the range of from 20 to 30 µm. Further, from the viewpoint of the electrical insulating properties, BLT properties, discharge properties, and radiator properties, component (E-1) preferably has a BET specific surface area of 0.01 to 5.0 m²/g, especially preferably 0.5 to 3.0 m²/g. Component (E-1) may be one type of component or a combination of two or more types of components.

Silicon carbide can be used as the below-mentioned component (E-2) and/or component (E-3). When silicon carbide is used as component (E-2) and/or component (E-3), the silicon carbide contained in the composition can have at least two peaks of the particle size distribution, that is, the silicon carbide can have a polydisperse particle size distribution. Specifically, the thermally conductive silicone composition can contain, as component (E-1), a silicon carbide having a peak of the particle size distribution in the range of from 10 to 40 µm, and, as component (E-2), a silicon carbide having a peak of the particle size distribution in the range of from 0.1 to 1.0 µm, and/or, as component (E-3), a silicon carbide having a peak of the particle size distribution in the range of from more than 1.0 to less than 10 µm.

«(E-2) First thermally conductive filler having a thermal conductivity of 10 to 300 W/mK and having a peak of the particle size distribution in the range of from 0.1 to 1.0 µm»

With respect to component (E-2), the thermal conductivity is a value as measured by a laser flash method. Further, the peak of the particle size distribution is as mentioned above in connection with component (E-1).

With respect to component (E-2), there is no particular limitation, and component (E-2) can be appropriately selected from conventionally known components. Component (E-2) is preferably alumina (thermal conductivity: 30 W/mK), aluminum nitride (thermal conductivity: 180 W/mK), aluminum hydroxide (thermal conductivity: 11 W/mK), magnesium oxide (thermal conductivity: 60 W/mK), zinc oxide (thermal conductivity: 25 W/mK), crystalline silica (thermal conductivity: 10 W/mK), aluminum (thermal conductivity: 250 W/mK), boron nitride (thermal conductivity: 60 to 200 W/mK), or graphitized carbon (thermal conductivity: 100 to 250 W/mK).

Further, from the viewpoint of the electrical insulating properties, BLT properties, discharge properties, and radiator properties, component (E-2) preferably has a BET specific surface area of 0.01 to 5 m²/g, especially preferably 0.1 to 1 m²/g.

Component (E-2) may be one type of component or a combination of two or more types of components.

«(E-3) Second thermally conductive filler having a thermal conductivity of 10 to 300 W/mK and having a peak of the particle size distribution in the range of from more than 1.0 to less than 10 µm»

With respect to component (E-3), the thermal conductivity is as mentioned above in connection with component (E-2). Further, the peak of the particle size distribution is as mentioned above in connection with component (E-1).

With respect to component (E-3), there is no particular limitation, and component (E-3) can be appropriately selected from conventionally known components. Component (E-3) is preferably alumina, aluminum nitride, aluminum hydroxide, magnesium oxide, zinc oxide, crystalline silica, aluminum, boron nitride, or graphitized carbon.

Further, from the viewpoint of the electrical insulating properties, BLT properties, discharge properties, and radiator properties, component (E-3) preferably has a BET specific surface area of 0.1 to 3.0 m²/g, especially preferably 0.5 to 2.0 m²/g.

Component (E-3) may be one type of component or a combination of two or more types of components.

«(E-4) Third thermally conductive filler (exclusive of silicon carbide) having a thermal conductivity of 60 to 300 W/mK and having a peak of the particle size distribution in the range of from 10 to 40 µm»

With respect to component (E-4), the thermal conductivity is as mentioned above in connection with component (E-2). Further, the peak of the particle size distribution is as mentioned above in connection with component (E-1).

With respect to component (E-4), there is no particular limitation, and component (E-4) can be appropriately selected from conventionally known components. Component (E-4) is preferably aluminum nitride, boron nitride, or graphitized carbon.

Further, from the viewpoint of the electrical insulating properties, BLT properties, discharge properties, and radiator properties, component (E-4) preferably has a BET specific surface area of 0.01 to 1.0 m²/g, especially preferably 0.1 to 0.5 m²/g.

Component (E-4) may be one type of component or a combination of two or more types of components.

### «(E-5) Additional thermally conductive filler»

Component (E) can contain (E-5) additional thermally conductive filler other than components (E-1) to (E-4).

Examples of component (E-5) include a thermally conductive filler having a thermal conductivity of 10 to 300 W/mK and having a peak of the particle size distribution in the range of more than 40 µm (for example, silicon carbide and aluminum nitride); and a thermally conductive filler having a thermal conductivity of 10 to less than 60 W/mK and having a peak of the particle size distribution in the range of from 10 to 40 µm. From the viewpoint of the electrical insulating properties, BLT properties, discharge properties, and radiator properties, component (E-5) preferably has a BET specific surface area of 0.1 to 3.0 m²/g, especially preferably 0.5 to 2.0 m²/g.

Component (E-5) may be one type of component or a combination of two or more types of components.

### <(F) Additional component>

The composition can contain (F) additional component, such as a reaction inhibitor, an organic solvent, a tackifier, an inorganic pigment, an organic pigment, a thixotropic agent, a viscosity modifier, a mildewproofing agent, a heat resistance improving agent, or a flame retardant, in such an amount that the effects of the present invention are not sacrificed. Each component (F) may be one type of component or a combination of two or more types of components.

### «Reaction inhibitor»

Examples of reaction inhibitors include organic compounds having a polar group in the molecule thereof, such as diallyl maleate; and organic compounds having an unsaturated bond, such as an acetylene alcohol and a derivative thereof. The reaction inhibitor suppresses the curing reaction rate of the composition and contributes to an improvement of the handling operation properties and the balance between the development of adhesive properties and the curing rate.

### «Organic solvent»

An organic solvent is a component that is capable of dissolving or dispersing therein the components contained in the composition. Examples of organic solvents include aromatic organic solvents, such as toluene and xylene.

### «Other (F) additional component»

Component (F) other than the reaction inhibitor and organic solvent can be appropriately selected from components used in the thermally conductive silicone composition.

### [Amounts of the components]

The amounts of the individual components contained in the thermally conductive silicone composition are as described below.

The total amount of the components (A) to (D) is 1.0 to 10.0 parts by mass, based on 100 parts by mass of component (E). When the total amount of the components (A) to (D) is less than 1.0 part by mass, based on 100 parts by mass of component (E), the thermal conductivity likely becomes high, but the amount of the polymer is extremely small, as compared to the amount of component (E), and thus there is a concern that the resultant composition cannot be obtained in a paste form. When the total amount of the components (A) to (D) is more than 10.0 parts by mass, based on 100 parts by mass of component (E), excellent discharge properties can be obtained, but the thermal conductivity is reduced. The total amount of the components (A) to (D) is preferably 2.0 to 8.0 parts by mass, especially preferably 3.0 to 7.0 parts by mass, based on 100 parts by mass of component (E). Further, the total amount of the components (A) to (D) may be 6.0 to 8.0 parts by mass, based on 100 parts by mass of component (E).

The amount of the component (E-2) is 28.0 parts by mass or less, based on 100 parts by mass of component (E). When the amount of the component (E-2) is more than 28.0 parts by mass, based on 100 parts by mass of component (E), the resultant mixture cannot be obtained in the form of a composition. From the viewpoint of the electrical insulating properties, BLT properties, discharge properties, and radiator properties, the amount of the component (E-2) is preferably 10.0 to 28.0 parts by mass, especially preferably 15.0 to 25.0 parts by mass, based on 100 parts by mass of component (E).

### [Preferred amounts of the components]

The amounts of the individual components contained in the thermally conductive silicone composition are preferably as described below.

From the viewpoint of the electrical insulating properties, BLT properties, discharge properties, and radiator properties, the amount of the component (E-1) is preferably 5.0 to 30.0 parts by mass, more preferably 10.0 to 30.0 parts by mass, especially preferably 10.0 to 25.0 parts by mass, based on 100 parts by mass of component (E).

From the viewpoint of the electrical insulating properties, BLT properties, discharge properties, and radiator properties, the amount of the component (E-3) is preferably 15.0 to 40.0 parts by mass, especially preferably 20.0 to 35.0 parts by mass, based on 100 parts by mass of component (E).

From the viewpoint of the electrical insulating properties, BLT properties, discharge properties, and radiator properties, the amount of the component (E-4) is preferably 5.0 to 40.0 parts by mass, especially preferably 20.0 to 35.0 parts by mass, based on 100 parts by mass of component (E).

Thus, it is preferred that, based on 100 parts by mass of component (E), the amount of the component (E-1) is 5.0 to 30.0 parts by mass, the amount of the component (E-2) is 10.0 to 28.0 parts by mass, the amount of the component (E-3) is 15.0 to 40.0 parts by mass, and the amount of the component (E-4) is 5.0 to 40.0 parts by mass.

From the viewpoint of the discharge properties and curing properties, based on 100 parts by mass of the total of components (A), (B), (C), (D), and (F), the amount of the component (A) is preferably 55.0 to 95.0 parts by mass, more preferably 60.0 to 90.0 parts by mass, especially preferably 65.0 to 85.0 parts by mass.

With respect to the amount of the component (B), there is no particular limitation as long as a network structure can be formed in a cured product of the thermally conductive silicone composition. The amount of the component (B) is preferably such an amount that the ratio (H/Vi) of the number H of the hydrogen atom bonded to a silicon atom of component (B) to the number Vi of the alkenyl group of component (A) is 0.1 to less than 3.5, more preferably such an amount that the ratio (H/Vi) is 0.2 to 2.5, especially preferably such an amount that the ratio (H/Vi) is 0.3 to 2.0.

The amount of the component (C) is a catalytic amount, based on the amount of the thermally conductive silicone composition. Specifically, from the viewpoint of the curing properties, based on 100 parts by mass of the total of components (A), (B), (C), (D), and (F), the amount of the component (C) is preferably 0.1 to 1,000 ppm by weight, especially preferably 0.5 to 200 ppm by weight, in terms of a platinum atom.

With respect to the amount of the component (F), there is no particular limitation as long as the purpose of use of the thermally conductive silicone composition can be achieved.

### (Method for producing the thermally conductive silicone composition)

The thermally conductive silicone composition can be produced by uniformly kneading components (A) to (E), which are essential components, and component (F), which is an optional component, by a mixing means, such as a universal kneading machine or a kneader.

### (Cured product)

The cured product of the thermally conductive silicone composition can be obtained by curing the thermally conductive silicone composition. The curing conditions (i.e., the heating temperature and heating time) can be appropriately controlled according to the heat resistance temperature of the member to which the thermally conductive silicone composition is applied. From the viewpoint of the heat resistance of the member and operation properties, the heating temperature is preferably 20 to 150°C, especially preferably higher than 23 to 100°C. The heating time varies depending on the amount of the material to be cured or the heating output of the apparatus used for curing, but, from the viewpoint of the simple and easy curing step, the heating time is preferably 15 minutes to 3 hours, especially preferably 30 minutes to 2 hours.

### (Use)

The cured product obtained by curing the thermally conductive silicone composition can be used as a radiator part of an electronic part for, for example, an electronic device or an integrated circuit element. Therefore, an electronic part comprising the thermally conductive silicone composition is also the subject for the present invention.

### Examples

Hereinbelow, the present invention will be described in more detail with reference to the following Examples and Comparative Examples. In the following Examples, the "part(s)" indicates part(s) by mass, and the "viscosity" means a viscosity measured at 23°C. The following Examples should not be construed as limiting the scope of the present invention.

### (Components used)

The components used in the Examples and Comparative Examples are as follows.

### (A) Polyorganosiloxane having an alkenyl group bonded to a silicon atom

(A-1): Bis vinyl terminated dimethylpolysiloxane: Linear vinyldimethylpolysiloxane, represented by M^{vi}DₙM^{vi}, having a viscosity of 0.5 Pa•s
(A-2): Mono vinyl terminated dimethylpolysiloxane: Linear vinyldimethylpolysiloxane, represented by M^{vi}DₙM, having a viscosity of 0.03 Pa•s

### (B) Polyorganohydrogensiloxane having a hydrogen atom bonded to a silicon atom

(B-1): Mono hydrogen terminated polysiloxane: Linear polymethylhydrogensiloxane represented by M^{H}DₙM (effective hydrogen amount: 0.04 mmol/g; viscosity: 0.02 mPa•s)
(B-2): Bis hydrogen terminated polysiloxane: Linear polymethylhydrogensiloxane represented by M^{H}DₙM^{H} (effective hydrogen amount: 1.2 mmol/g; viscosity: 10 mPa•s)
(B-3): Dimethylhydrogensilyloxy terminated dimethylhydrogen polysiloxane: Linear polymethylhydrogensiloxane having both ends capped by an M^{H} unit and having an intermediate unit comprised only of a D unit and a D^{H} unit (effective hydrogen amount: 2.6 mmol/g; viscosity: 20 mPa•s)

### (C) Pt catalyst

(C-1): Karstedt's catalyst (platinum(0)-1,3-divinyl-1,1,3,3-tetramethyldisiloxane complex; 2.0% by mass, in terms of a platinum atom)

### (D) Siloxane compound

(D-1): Mixture (n = 10 to 50) of a cyclic siloxane compound represented by the following formula:

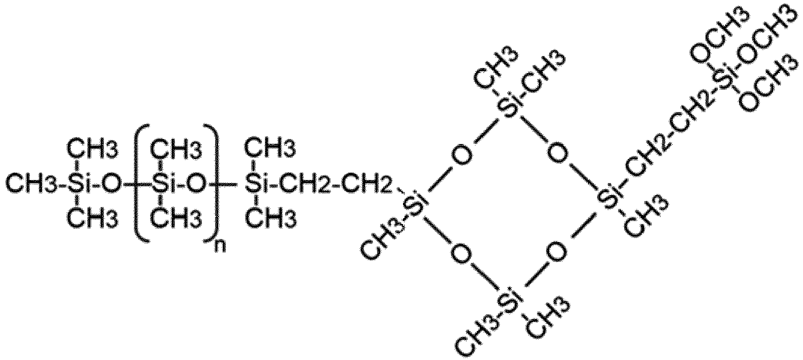

### (E) Thermally conductive filler

The thermally conductive fillers used in the Examples are of a monodisperse type and therefore, in the thermally conductive fillers used in the Examples, the peak diameter of particle size distribution has the same meaning as that of the "average particle diameter". Further, the "Particle diameter" shown in the tables below indicates "peak diameter of particle size distribution".
(E-1) Silicon carbide having a peak of the particle size distribution in the range of from 10 to 40 µm
(E-1-1): Silicon carbide (having a peak of the particle size distribution in 20 µm; thermal conductivity: 200 W/mK; BET specific surface area: 0.2 m²/g; source of supply (company name): Shinano Electric Refining Co., Ltd.)
(E-1-2): Silicon carbide (having a peak of the particle size distribution in 25 µm; thermal conductivity: 200 W/mK; BET specific surface area: 0.1 m²/g; source of supply (company name): Shinano Electric Refining Co., Ltd.)
(E-1-3): Silicon carbide (having a peak of the particle size distribution in 30 µm; thermal conductivity: 200 W/mK; BET specific surface area: 0.1 m²/g; source of supply (company name): Shinano Electric Refining Co., Ltd.)
(E-2): First thermally conductive filler
(E-2-1): Zinc oxide (having a peak of the particle size distribution in 0.1 µm; thermal conductivity: 25 W/mK; BET specific surface area: 9.0 m²/g; source of supply (company name): Zochem LLC)
(E-2-2): Aluminum nitride (having a peak of the particle size distribution in 0.1 µm; thermal conductivity: 180 W/mK; BET specific surface area: 2.8 m²/g; source of supply (company name): Tokuyama Corporation)
(E-2-3): Alumina (having a peak of the particle size distribution in 0.5 µm; thermal conductivity: 30 W/mK; BET specific surface area: 4.6 m²/g; source of supply (company name): Sumitomo Chemical Co., Ltd.)
(E-2-4): Silicon carbide (having a peak of the particle size distribution in 0.5 µm; thermal conductivity: 200 W/mK; BET specific surface area: 5.0 m²/g; source of supply (company name): Shinano Electric Refining Co., Ltd.)
(E-2-5): Alumina (having a peak of the particle size distribution in 0.3 µm; thermal conductivity: 30 W/mK; BET specific surface area: 7.2 m²/g; source of supply (company name): Sumitomo Chemical Co., Ltd.)
(E-2-6): Alumina (having a peak of the particle size distribution in 0.8 µm; thermal conductivity: 30 W/mK; BET specific surface area: 2.1 m²/g; source of supply (company name): Sumitomo Chemical Co., Ltd.)
(E-3): Second thermally conductive filler
(E-3-1): Alumina (having a peak of the particle size distribution in 3.0 µm; thermal conductivity: 30 W/mK; BET specific surface area: 0.6 m²/g; source of supply (company name): Sumitomo Chemical Co., Ltd.)
(E-3-2): Alumina (having a peak of the particle size distribution in 5.0 µm; thermal conductivity: 30 W/mK; BET specific surface area: 0.3 m²/g; source of supply (company name): Sumitomo Chemical Co., Ltd.)
(E-3-3): Silicon carbide (having a peak of the particle size distribution in 5.0 µm; thermal conductivity: 200 W/mK; BET specific surface area: 1.5 m²/g; source of supply (company name): Shinano Electric Refining Co., Ltd.)
(E-3-4): Alumina (having a peak of the particle size distribution in 2.0 µm; thermal conductivity: 30 W/mK; BET specific surface area: 1.0 m²/g; source of supply (company name): Sumitomo Chemical Co., Ltd.)
(E-3-5): Alumina (having a peak of the particle size distribution in 7.0 µm; thermal conductivity: 30 W/mK; BET specific surface area: 0.4 m²/g; source of supply (company name): Sumitomo Chemical Co., Ltd.)
(E-4): Third thermally conductive filler
(E-4-1): Aluminum nitride (having a peak of the particle size distribution in 25 µm; thermal conductivity: 180 W/mK; BET specific surface area: 0.2 m²/g; source of supply (company name): Toyo Aluminum K.K.)
(E-5): Other thermally conductive fillers
(E-5-1): Silicon carbide (having a peak of the particle size distribution in 60 µm; thermal conductivity: 200 W/mK; BET specific surface area: 0.2 m²/g; source of supply (company name): Shinano Electric Refining Co., Ltd.)
(E-5-2): Alumina (having a peak of the particle size distribution in 25 µm; thermal conductivity: 30 W/mK; BET specific surface area: 0.1 m²/g; source of supply (company name): Sumitomo Chemical Co., Ltd.)
(E-5-3): Aluminum nitride (having a peak of the particle size distribution in 60 µm; thermal conductivity: 180 W/mK; BET specific surface area: 0.1 m²/g; source of supply (company name): Toyo Aluminum K.K.)

### (F) Other components

### (F-1) Reaction inhibitor

Dimethylbis(1,1-dimethyl-2-propynyloxy)silane (source of supply (company name): Momentive Performance Materials Inc.)

### (1) Preparation of base polymer (1) (silicone composition 1 containing no filler)

With respect to the base polymer to be mixed in the Examples and Comparative Examples, the base polymer having the formulation shown in Table 1 was kneaded using a planetary mixer to prepare base polymer (1).

### (2) Preparation of base polymer (2) (silicone composition 2 containing no filler)

Base polymer (2) having the formulation shown in Table 2 was prepared by the same method as that for base polymer (1).

### (3) Preparation of a thermally conductive silicone composition

### Examples 1 to 20 and Comparative Examples 1 to 13

The components for thermally conductive filler and base polymer were mixed in the formulation shown in Tables 3 to 13, and kneaded using a planetary mixer to prepare a thermally conductive silicone composition.

### (Method for evaluation)

### 1. Thermal conductivity

Using a thermal conductivity meter (TPS 1500) (manufactured by Kyoto Electronics Manufacturing Co., Ltd.), a container made of a plastic having an inner diameter of 30 mm and a depth of 10 mm was filled with the composition, and allowed to stand at 70°C for one hour to cure the composition, producing a sample. A sensor of the thermal conductivity meter was placed between the obtained two samples, and a thermal conductivity was measured. The radiator properties were evaluated in accordance with the following criterion. The composition having a thermal conductivity of 7.0 W/(m•K) or more was judged to have excellent radiator properties.

### 2. Flow rate (Discharge properties)

A flow rate (g/min) of the composition was measured as described below, and used for evaluation of discharge properties.
(1) A 30 cc EFD syringe, manufactured by Nordson Corporation, was filled with the composition.
(2) Using a high-precision dispenser with correction function, SuperΣxIII, manufactured by Musashi Engineering, Inc., as a dispenser, the composition was discharged at 0.625 MPa for one minute.
(3) The amount of the composition discharged was measured, and a flow rate (g/min) of the composition was determined.

The composition having a flow rate of 20 g/min or more was judged to have excellent discharge properties.

### 3. BLT

The measurement of a BLT, i.e., a bond line thickness of a radiator material was conducted as described below. Two silicon chips having a size of 10 mm × 10 mm were prepared, and a thickness of each chip was preliminarily measured. 0.01 ml of the composition was applied to the one silicon chip, which had been measured with respect to the thickness, and then another silicon chip was stacked on the composition applied to the chip, and a load of 100 N was applied to the resultant stacked material, and then the stacked material was allowed to stand at 70°C for one hour. Using a micrometer, a thickness of the stacked material was measured. A BLT thickness was determined by subtracting the total thickness of the two silicon chips from the measured thickness of the stacked material.

The composition having a BLT of 60 µm or less was judged to have low BLT.

### 4. Dielectric breakdown voltage

A dielectric breakdown voltage was measured in accordance with JIS K 6249. Using an electrically insulating oil dielectric breakdown voltage testing machine Portatest A-2 (manufactured by Soken Electric Co., Ltd.), a dielectric breakdown voltage was measured. The composition was cured at 70°C for one hour, and controlled to have a thickness of 1 mm to obtain a test specimen, and a voltage was applied to the test specimen at a voltage increase rate of 2 kV/sec, and a voltage measured at a time when electrical conduction of the test specimen was made so that electrical insulating properties disappeared was determined as a dielectric breakdown voltage. The composition having a dielectric breakdown voltage of 1.0 kV/mm or more was judged to have excellent electrical insulating properties.

### 5. Volume resistivity

A volume resistivity was measured in accordance with JIS K 6249. Specifically, using Advantest R8340 digital ultrahigh resistance/microammeter (manufactured by Advantest Corporation), a volume resistance was measured. The composition was cured at 70°C for one hour, and controlled to have a thickness of 1 mm to obtain a test specimen, and a voltage of 500 V was applied to the test specimen, and, from a current value obtained as a response value of the voltage, a volume resistivity was determined by making a calculation. The composition having a volume resistivity of 1.00 × 10¹² Ω•cm or more was judged to have excellent electrical insulating properties.

**[Table 1]**

| Silicone composition 1 containing no filler | | Parts by mass |
|---|---|---|
| (A) | Both-end vinyldimethylpolysiloxane | 78.38 |
| (B) | One-end hydrogenpolysiloxane | 2.64 |
| | Both-end hydrogenpolysiloxane | 2.64 |
| | Both-end side-chain hydrogenpolysiloxane | 2.64 |
| (C) | Karstedt's catalyst | 0.85 |
| (D) | Siloxane compound | 12.76 |
| (F) | Reaction inhibitor | 0.09 |
| Total | | 100.00 |

**[Table 2]**

| Silicone composition 2 containing no filler | | Parts by mass |
|---|---|---|
| (A) | Both-end vinyldimethylpolysiloxane | 6.97 |
| | One-end vinyldimethylpolysiloxane | 68.81 |
| (B) | Both-end side-chain hydrogenpolysiloxane | 9.82 |
| (C) | Karstedt's catalyst | 0.50 |
| (D) | Siloxane compound | 13.84 |
| (F) | Reaction inhibitor | 0.06 |
| Total | | 100.00 |

**[Table 3]**

| | | Particle diameter (*µ*m) | Example 1 | Example 2 | Example 3 | Comparative Example 1 | Comparative Example 2 |
|---|---|---|---|---|---|---|---|
| (**E-2-3**) | Alumina | **0.5** | **21.3** | **21.3** | **21.3** | **21.3** | **21.3** |
| (**E-3-1**) | Alumina | **3.0** | **31.7** | **31.7** | **31.7** | **31.7** | **31.7** |
| (**E-1-1**) | Silicon carbide | **20** | **23.5** | **29.8** | **7.3** | **47.0** | **23.5** |
| (**E-4-1**) | Aluminum nitride | **25** | **23.5** | **17.2** | **39.7** | **0.0** | **0.0** |
| **(E-5-3)** | Aluminum nitride | **60** | **0.0** | **0.0** | **0.0** | **0.0** | **23.5** |
| Other **(E**) than | Silicone composition 1 containing no filler | - | **6.3** | **6.3** | **6.3** | **6.3** | **6.3** |
| Total | | | **106.3** | **106.3** | **106.3** | **106.3** | **106.3** |
| Thermal conductivity (**W/mK)** | | | **8.2** | **8.8** | **8.1** | **7.8** | **8.4** |
| Flow rate (**g/min**) | | | **48** | **36** | **53** | **7** | **30** |
| **BLT(*µ*m)** | | | **42** | **49** | **51** | **92** | 120 |
| Dielectric breakdown voltage (**kV/mm**) | | | **8** | **6** | **12** | **1 or less** | **15** |
| Volume resistivity (**Ω · cm**) | | | **6.00E+12** | **5.00E+12** | **7.00E+12** | **1.20E+10** | **8.00E+12** |

**[Table 4]**

| | | Particle diameter (*µ*m) | Example 4 | Example 5 | Example 6 | Comparative Example 3 | Comparative Example 4 |
|---|---|---|---|---|---|---|---|
| (**E-2-3**) | Alumina | **0.5** | **22.1** | **22.1** | **22.1** | **22.1** | **22.1** |
| (**E-3-1**) | Alumina | **3.0** | **34.9** | **34.9** | **34.9** | **34.9** | **34.9** |
| (**E-1-2**) | Silicon carbide | **25** | **21.5** | **27.3** | **6.7** | **43.0** | **21.5** |
| (**E-4-1**) | Aluminum nitride | **25** | **21.5** | **15.7** | **36.3** | **0.0** | **0.0** |
| (**E-5-3**) | Aluminum nitride | **60** | **0.0** | **0.0** | **0.0** | **0.0** | **21.5** |
| **Other than (E)** | Silicone composition 1 containing no filler | - | **6.8** | **6.8** | **6.8** | **6.8** | **6.8** |
| Total | | | **106.8** | **106.8** | **106.8** | **106.8** | **106.8** |
| Thermal conductivity **(W/mK)** | | | **9.1** | **9.3** | **8.7** | **9.3** | **8.7** |
| Flow rate (g/min) | | | **32** | **32** | **28** | **3** | **14** |
| **BLT(***µ*m) | | | **53** | **55** | **51** | **130** | **170** |
| Dielectric breakdown voltage **(kV/mm**) | | | **9** | **5** | **11** | **1 or less** | **13** |
| Volume resistivity (**Ω · cm**) | | | **7.00E+12** | **5.00E+12** | **6.00E+12** | **1.00E+10** | **5.00E+12** |

**[Table 5]**

| | | Particle diameter (*µ*m) | Example 7 | Example 8 | Example 9 | Comparative Example 5 | Comparative Example 6 |
|---|---|---|---|---|---|---|---|
| **(E-2-3)** | Alumina | **0.5** | **23.8** | **23.8** | **23.8** | **23.8** | **23.8** |
| **(E-3-1)** | Alumina | **3.0** | **34.2** | **34.2** | **34.2** | **34.2** | **34.2** |
| **(E-1-3)** | Silicon carbide | **30** | **21.0** | **26.6** | **6.5** | **42.0** | **21.0** |
| **(E-4-1)** | Aluminum nitride | **25** | **21.0** | **15.4** | **35.5** | **0.0** | **0.0** |
| **(E-5-3)** | Aluminum nitride | **60** | **0.0** | **0.0** | **0.0** | **0.0** | **21.0** |
| **than (E)** | Silicone composition 1 containing no filler | - | **6.8** | **6.8** | **6.8** | **6.8** | **6.8** |
| Total | | | **106.8** | **106.8** | **106.8** | **106.8** | **106.8** |
| Thermal conductivity (**W/mK)** | | | **9.2** | **9.3** | **8.2** | **9.8** | **8.7** |
| Flow rate (g/min) | | | **28** | **25** | **38** | **3** | **6** |
| **BLT(*µ***m) | | | **56** | **52** | **54** | **128** | **200** |
| Dielectric breakdown voltage (**kV/mm**) | | | **10** | **4** | **7** | **1 or less** | **13** |
| Volume resistivity (Ω · cm) | | | **8.00E+12** | **6.00E+12** | **4.00E+12** | **2.00E+10** | **4.00E+12** |

**[Table 6]**

| | | Particle diameter (***µ*m**) | Comparative Example 7 | Comparative Example 8 |
|---|---|---|---|---|
| (**E-2-4**) | Silicon carbide | **0.5** | **21.3** | **21.3** |
| (**E-3-1**) | Alumina | **3.0** | **31.7** | **31.7** |
| (**E-3-3**) | Silicon carbide | **5.0** | **47.0** | **0.0** |
| (**E-5-1**) | Silicon carbide | **60** | **0.0** | **47.0** |
| Other than (**E**) | Silicone composition 1 containing no filler | - | **6.3** | **6.3** |
| Total | | | **106.3** | **106.3** |
| Thermal conductivity (**W/mK**) | | | **-** | **7.6** |
| Flow rate **(g/min)** | | | **-** | **18** |
| **BLT(*µ*m)** | | | **-** | **126** |
| Dielectric breakdown voltage (**kV/mm**) | | | **-** | **1 or less** |
| Volume resistivity (**Ω · cm**) | | | **-** | **1.20E+08** |

**[Table 7]**

| | | Particle diameter **(*µ*m)** | Comparative Example 9 |
|---|---|---|---|
| (**E-2-3**) | Alumina | **0.5** | **21.3** |
| (**E-3-1**) | Alumina | **3.0** | **31.7** |
| (**E-1-1**) | Silicon carbide | **20** | **23.5** |
| (**E-5-2**) | Alumina | **25** | **23.5** |
| Other than(**E**) | Silicone composition 1 containing no filler | - | **6.3** |
| Total | | | **106.3** |
| Thermal conductivity (**W/mK**) | | | **5.2** |
| Flow rate (**g/min**) | | | **23** |
| **BLT(*µ*m)** | | | **45** |
| Dielectric breakdown voltage(**kV/mm**) | | | **8** |
| Volume resistivity (**Ω · cm**) | | | **8.00E+12** |

**[Table 8]**

| | | Particle diameter **(*µ*m)** | Example 10 | Comparative Example 10 |
|---|---|---|---|---|
| (**E-2-3**) | Alumina | **0.5** | **21.2** | **21.2** |
| (**E-3-1**) | Alumina | **3.0** | **31.8** | **31.8** |
| (**E-1-1**) | Silicon carbide | **20** | **23.5** | **47.0** |
| (**E-4-1**) | Aluminum nitride | **25** | **23.5** | **0.0** |
| Other than (**E**) | Silicone composition 2 containing no filler | - | **5.8** | **5.8** |
| Total | | | **105.8** | **105.8** |
| Thermal conductivity (**W/mK**) | | | **7.8** | **7.5** |
| Flow rate (**g/min**) | | | **58** | **5** |
| BLT(***µ*m**) | | | **47** | **88** |
| Dielectric breakdown voltage (**kV/mm**) | | | **11** | **1 or less** |
| Volume resistivity (**Ω · cm**) | | | **5.00E+12** | **1.10E+10** |

**[Table 9]**

| | | Particle diameter **(*µ*m)** | Example 11 | Comparative Example 11 |
|---|---|---|---|---|
| (**E-2-3**) | Alumina | **0.5** | **21.2** | **21.2** |
| (**E-3-1**) | Alumina | **3.0** | **31.8** | **31.8** |
| (**E-1-3**) | Silicon carbide | **30** | **23.5** | **47.0** |
| (**E-4-1**) | Aluminum nitride | **25** | **23.5** | **0.0** |
| Other than (**E**) | Silicone composition 1 containing no filler | - | **5.8** | **5.8** |
| Total | | | **105.8** | **105.8** |
| Thermal conductivity (**W/mK**) | | | **7.8** | **7.5** |
| Flow rate (**g/min**) | | | **58** | **5** |
| **BLT(*µ*m)** | | | **47** | **88** |
| Dielectric breakdown voltage (**kV/mm**) | | | **11** | **1 or less** |
| Volume resistivity (**Ω · cm**) | | | **5.00E+12** | **1.10E+10** |

**[Table 10]**

| | | Particle diameter **(*µ*m)** | Example 12 | Example 13 |
|---|---|---|---|---|
| (**E-2-5**) | Alumina | **0.3** | **21.3** | **0.0** |
| (**E-2-6**) | Alumina | **0.8** | **0.0** | **18.3** |
| (**E-3-1**) | Alumina | **3.0** | **29.7** | **34.7** |
| (**E-1-1**) | Silicon carbide | **20** | **24.5** | **23.5** |
| (**E-4-1**) | Aluminum nitride | **25** | **24.5** | **23.5** |
| Other than (**E**) | Silicone composition 1 containing no filler | **-** | **6.3** | **6.8** |
| Total | | | **106.3** | **106.8** |
| Thermal conductivity (**W/mK**) | | | **8.1** | **8.5** |
| Flow rate (**g/min**) | | | **48** | **52** |
| **BLT(*µ*m)** | | | **52** | **54** |
| Dielectric breakdown voltage (**kV/mm**) | | | **9** | **8** |
| Volume resistivity (**Ω · cm**) | | | **5.00E+12** | **6.00E+12** |

**[Table 11]**

| | | Particle diameter **(*µ*m)** | Example 14 | Example 15 |
|---|---|---|---|---|
| (**E-2-5**) | Alumina | **0.3** | **20.4** | **23.7** |
| (**E-3-4**) | Alumina | **2.0** | **28.6** | **0.0** |
| (**E-3-5**) | Alumina | **7.0** | **0.0** | **27.3** |
| (**E-1-1**) | Silicon carbide | **20** | **25.5** | **24.5** |
| (**E-4-1**) | Aluminum nitride | **25** | **25.5** | **24.5** |
| Other than (**E**) | Silicone composition 1 containing no filler | **-** | **6.3** | **6.3** |
| Total | | | **106.3** | **106.3** |
| Thermal conductivity (**W/mK**) | | | **8.3** | **8.6** |
| Flow rate (**g/min**) | | | **38** | **47** |
| **BLT(*µ***m) | | | **49** | **52** |
| Dielectric breakdown voltage **(kV/mm)** | | | **7** | **8** |
| Volume resistivity (**Ω · cm**) | | | **6.00E+12** | **9.00E+12** |

**[Table 12]**

| | | Particle diameter(*µ*m) | Example 16 | Example 17 | Comparative Example 12 |
|---|---|---|---|---|---|
| (**E-2-1**) | Zinc oxide | **0.1** | **0.7** | **3.3** | **9.4** |
| (**E-2-3**) | Alumina | **0.5** | **20.5** | **20.0** | **18.7** |
| (**E-3-1**) | Alumina | **3.0** | **32.6** | **31.7** | **29.7** |
| (**E-1-1**) | Silicon carbide | **20** | **23.1** | **22.5** | **21.1** |
| (**E-4-1**) | Aluminum nitride | **25** | **23.1** | **22.5** | **21.1** |
| Other (**E**) than | Silicone composition 2 containing no filler | - | **5.6** | **5.4** | **5.1** |
| Total | | | **105.6** | **105.4** | **105.1** |
| Thermal conductivity (**W/mK**) | | | **7.8** | **7.3** | **-** |
| Flow rate (**g/min**) | | | **38** | **32** | **-** |
| **BLT (*µ*m)** | | | **48** | **46** | **-** |
| Dielectric breakdown voltage **(kV/mm)** | | | **11** | **10** | **-** |
| Volume resistivity (**Ω · cm**) | | | **8.00E+12** | **3.00E+12** | **-** |

**[Table 13]**

| | | Particle diameter**(*µ*m)** | Example 18 | Example 19 | Example 20 | Comparative Example 13 |
|---|---|---|---|---|---|---|
| (**E-2-1**) | Zinc oxide | **0.1** | **2.6** | **6.3** | **9.6** | **11.1** |
| (**E-2-2**) | Aluminum nitride | **0.1** | **19.5** | **18.8** | **18.1** | **22.2** |
| (**E-3-2**) | Alumina | **5.0** | **26.7** | **25.7** | **24.7** | **22.8** |
| (**E-1-1**) | Silicon carbide | **20** | **25.6** | **24.7** | **23.8** | **21.9** |
| (**E-4-1**) | Aluminum nitride | **25** | **25.6** | **24.7** | **23.8** | **21.9** |
| Other than (**E**) | Silicone composition 1 containing no filler | **-** | **7.5** | **7.2** | **7.0** | **6.5** |
| Total | | | **107.5** | **107.4** | **107.0** | **106.4** |
| Thermal conductivity (W/mK) | | | **7.8** | **7.6** | **7.2** | **-** |
| Flow rate (g/min) | | | **32** | **28** | **23** | **-** |
| **BLT(*µ*m)** | | | **48** | **42** | **46** | **-** |
| Dielectric breakdown voltage (kV/mm) | | | **3** | **2** | **5** | **-** |
| Volume resistivity (Ω · cm) | | | **5.00E+12** | **2.00E+12** | **1.00E+12** | **-** |

As apparent from the tables above, the thermally conductive silicone compositions in the Examples had low BLT and excellent electrical insulating properties, discharge properties, and radiator properties. Specifically, the amount of the component (E), based on the total amount of the components (A) to (D), and the amount of the component (E-2), based on the amount of the component (E), were in their respective predetermined ranges, and therefore the thermal conductivity and discharge properties were able to be appropriately controlled while maintaining the BLT properties.

Particularly, from a comparison between Example 1 and Example 10, it was found that when the amount of the "silicone composition containing no filler" was large (that is, when the total amount of the components (A) to (D) was 6.0 parts by mass or more, based on 100 parts by mass of component (E)), a lower BLT and more excellent discharge properties and radiator properties were obtained.

From a comparison between Examples 1 to 3, it was found that when the amount of component (E-1) was large, more excellent radiator properties were obtained.

From a comparison between Examples 1 and 2, it was found that when the amount of component (E-1) was small, more excellent electrical insulating properties were obtained. Further, as compared to Example 3, in Examples 1 and 2, a lower BLT and more excellent discharge properties were obtained.

From a comparison between Examples 1, 4, and 7, it was found that when the particle diameter of component (E-1) was large, more excellent thermal conductivity was obtained. Among Examples 1 to 9, in Examples 1, 4, and 7, a lower BLT and more excellent discharge properties were obtained.

The composition in Comparative Example 1 does not contain component (E-4). Therefore, the composition in Comparative Example 1 had poor discharge properties and electrical insulating properties, as compared to the compositions in Examples 1 to 3.

The composition in Comparative Example 2 does not contain component (E-4). In addition, the composition in Comparative Example 2 contains a thermally conductive filler having a large peak of the particle size distribution, as compared to component (E-4). Therefore, the composition in Comparative Example 2 had poor discharge properties, as compared to the composition in Example 1.

The relationship between Examples 4 to 6 and Comparative Example 3 and the relationship between Examples 7 to 9 and Comparative Example 5 are similar to the relationship between Examples 1 to 3 and Comparative Example 1. Further, the relationship between Example 4 and Comparative Example 4 and the relationship between Example 7 and Comparative Example 6 are similar to the relationship between Example 1 and Comparative Example 2.

The composition in Comparative Example 7 does not contain component (E-1) and component (E-4). Therefore, the composition in Comparative Example 7 could not be obtained in the form of an appropriate composition.

The composition in Comparative Example 8 does not contain component (E-1) and component (E-4). In addition, the composition in Comparative Example 8 contains silicon carbide having a large peak of the particle size distribution, as compared to component (E-1). Therefore, the composition in Comparative Example 8 had poor discharge properties and electrical insulating properties, as compared to the composition in Example 1.

The composition in Comparative Example 9 contains a thermally conductive filler having a low thermal conductivity, as compared to component (E-4). Therefore, the composition in Comparative Example 9 had poor thermal conductivity.

The composition in Comparative Example 10 does not contain component (E-4). Therefore, the composition in Comparative Example 10 had poor discharge properties and electrical insulating properties, as compared to the composition in Example 10.

The composition in Comparative Example 11 does not contain component (E-4). Therefore, the composition in Comparative Example 11 had poor discharge properties and electrical insulating properties, as compared to the composition in Example 11.

In the compositions in Comparative Examples 12 and 13, the amount of the component (E-2) is more than 28.0 parts by mass, based on 100 parts by mass of the thermally conductive filler. Therefore, the compositions in Comparative Examples 12 and 13 could not be obtained in the form of an appropriate composition.

## Claims

1. A thermally conductive silicone composition comprising:
(A) a polyorganosiloxane having an alkenyl group bonded to a silicon atom;
(B) a polyorganohydrogensiloxane having a hydrogen atom bonded to a silicon atom;
(C) a Pt catalyst;
(D) a siloxane compound represented by the following general formula (1): 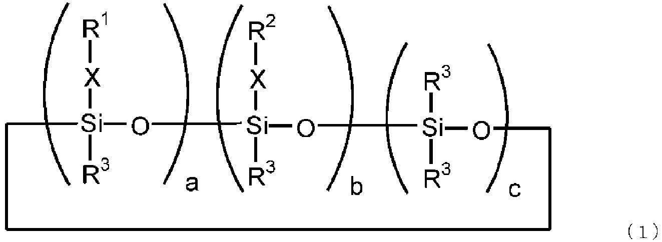 wherein R¹ is a group having an alkoxysilyl group having 1 to 4 carbon atoms,
R² is a linear organosiloxy group represented by the following general formula (2): 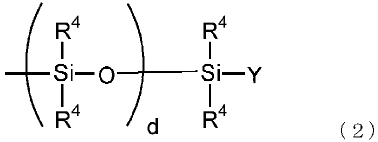 wherein each R⁴ is independently a monovalent hydrocarbon group having 1 to 12 carbon atoms, Y is a group selected from the group consisting of R⁴ and an aliphatic unsaturated group, and d is an integer of 2 to 60,
each X is independently a divalent hydrocarbon group having 2 to 10 carbon atoms,
each of a and b is independently an integer of 1 or more,
c is an integer of 0 or more,
wherein a + b + c is an integer of 4 or more, and
each R³ is independently a monovalent hydrocarbon group having 1 to 6 carbon atoms or a hydrogen atom;
and
(E) a thermally conductive filler,
wherein the component (A) comprises (A-1) a polyorganosiloxane having in the molecule thereof two or more alkenyl groups bonded to a silicon atom,
wherein the component (B) comprises (B-1) a polyorganohydrogensiloxane having in the molecule thereof two or more hydrogen atoms bonded to a silicon atom,
wherein the component (E) comprises:
(E-1) a silicon carbide having a peak of the particle size distribution in the range of from 10 to 40 µm,
(E-2) a first thermally conductive filler having a thermal conductivity of 10 to 300 W/mK and having a peak of the particle size distribution in the range of from 0.1 to 1.0 µm,
(E-3) a second thermally conductive filler having a thermal conductivity of 10 to 300 W/mK and having a peak of the particle size distribution in the range of from more than 1.0 to less than 10 µm, and
(E-4) a third thermally conductive filler (exclusive of silicon carbide) having a thermal conductivity of 60 to 300 W/mK and having a peak of the particle size distribution in the range of from 10 to 40 µm,
wherein the total amount of the components (A) to (D) is 1.0 to 10.0 parts by mass, based on 100 parts by mass of the component (E), and
wherein the amount of the component (E-2) is 28.0 parts by mass or less, based on 100 parts by mass of the component (E).

2. The thermally conductive silicone composition according to claim 1, wherein the component (E-2) is at least one member selected from the group consisting of alumina, aluminum nitride, aluminum hydroxide, magnesium oxide, zinc oxide, crystalline silica, aluminum, boron nitride, and graphitized carbon,
the component (E-3) is at least one member selected from the group consisting of alumina, aluminum nitride, aluminum hydroxide, magnesium oxide, zinc oxide, crystalline silica, aluminum, boron nitride, and graphitized carbon, and
the component (E-4) is at least one member selected from the group consisting of aluminum nitride, boron nitride, and graphitized carbon.

3. The thermally conductive silicone composition according to claim 1 or 2, further comprising at least one member selected from the group consisting of (A-2) a polyorganosiloxane having in the molecule thereof one alkenyl group bonded to a silicon atom and (B-2) a polyorganohydrogensiloxane having in the molecule thereof one hydrogen atom bonded to a silicon atom.

4. The thermally conductive silicone composition according to any one of claims 1 to 3, wherein, based on 100 parts by mass of the component (E),
the amount of the component (E-1) is 5.0 to 30.0 parts by mass,
the amount of the component (E-2) is 10.0 to 28.0 parts by mass,
the amount of the component (E-3) is 15.0 to 40.0 parts by mass, and
the amount of the component (E-4) is 5.0 to 40.0 parts by mass.

5. A cured product which is obtained by curing the thermally conductive silicone composition according to any one of claims 1 to 4.

6. An electronic part comprising the thermally conductive silicone composition according to any one of claims 1 to 4.

## Patentansprüche

1. Wärmeleitende Silikonzusammensetzung, umfassend:
(A) ein Polyorganosiloxan mit einer an ein Siliciumatom gebundenen Alkenylgruppe;
(B) ein Polyorganohydrogensiloxan , bei dem ein Wasserstoffatom an ein Siliciumatom gebunden ist;
(C) einen Pt-Katalysator;
(D) eine Siloxanverbindung, dargestellt durch die folgende allgemeine Formel (1): 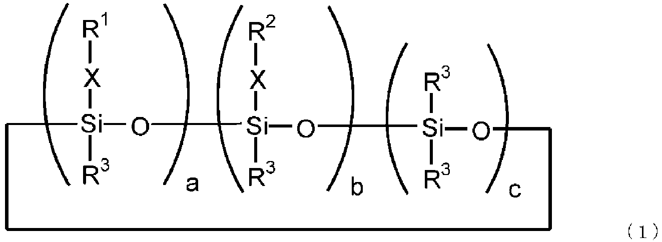 wobei R¹ eine Gruppe mit einer Alkoxysilylgruppe mit 1 bis 4 Kohlenstoffatomen ist,
R² eine lineare Organosiloxygruppe, dargestellt durch die folgende allgemeine Formel (2), ist: 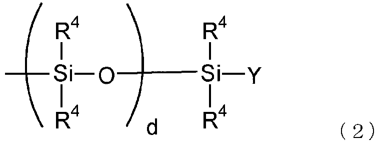 wobei jedes R⁴ unabhängig eine einwertige Kohlenwasserstoffgruppe mit 1 bis 12 Kohlenstoffatomen ist, Y eine Gruppe ist, ausgewählt aus der Gruppe, bestehend aus R⁴ und einer aliphatischen ungesättigten Gruppe, und d eine ganze Zahl von 2 bis 60 ist,
jedes X unabhängig eine zweiwertige Kohlenwasserstoffgruppe mit 2 bis 10 Kohlenstoffatomen ist,
a und b jeweils unabhängig voneinander ganze Zahlen von mindestens 1 oder größer sind,
c ist eine ganze Zahl von 0 oder größer.
wobei a + b + c eine ganze Zahl von 4 oder größer ist, und
jedes R³ unabhängig eine einwertige Kohlenwasserstoffgruppe mit 1 bis 6 Kohlenstoffatomen oder einem Wasserstoffatom ist;
und
(E) einen wärmeleitenden Füllstoff,
wobei die Komponente (A) (A-1) ein Polyorganosiloxan umfasst, das in seinem Molekül zwei oder mehr an ein Siliciumatom gebundene Alkenylgruppen aufweist,
wobei die Komponente (B) (B-1) ein Polyorganohydrogensiloxan umfasst, dessen Molekül zwei oder mehr an ein Siliciumatom gebundene Wasserstoffatome aufweist,
wobei die Komponente (E) umfasst:
(E-1) ein Siliciumcarbid mit einem Maximum der Teilchengrößenverteilung im Bereich von 10 bis 40 µm,
(E-2) einen ersten wärmeleitfähigen Füllstoff mit einer Wärmeleitfähigkeit von 10 bis 300 W/mK und einem Maximum der Teilchengrößenverteilung im Bereich von 0,1 bis 1,0 µm,
(E-3) einen zweiten wärmeleitenden Füllstoff mit einer Wärmeleitfähigkeit von 10 bis 300 W/mK und einem Maximum der Teilchengrößenverteilung im Bereich von mehr als 1,0 bis weniger als 10 µm, und
(E-4) einen dritten wärmeleitfähigen Füllstoff (ausgenommen Siliciumcarbid) mit einer Wärmeleitfähigkeit von 60 bis 300 W/mK und einem Maximum der Teilchengrößenverteilung im Bereich von 10 bis 40 µm,
wobei die Gesamtmenge der Komponenten (A) bis (D) 1,0 bis 10,0 Massenteile beträgt, bezogen auf 100 Massenteile der Komponente (E), und
wobei die Menge der Komponente (E-2) 28,0 Massenteile oder weniger beträgt, bezogen auf 100 Massenteile der Komponente (E).

2. Wärmeleitende Silikonzusammensetzung nach Anspruch 1, wobei
die Komponente (E-2) mindestens ein Mitglied ist, ausgewählt aus der Gruppe, bestehend aus Aluminiumoxid, Aluminiumnitrid, Aluminiumhydroxid, Magnesiumoxid, Zinkoxid, kristallinem Siliciumdioxid, Aluminium, Bornitrid und graphitisiertem Kohlenstoff,
die Komponente (E-3) mindestens ein Mitglied ist, ausgewählt aus der Gruppe, bestehend aus Aluminiumoxid, Aluminiumnitrid, Aluminiumhydroxid, Magnesiumoxid, Zinkoxid, kristallinem Siliciumdioxid, Aluminium, Bornitrid und graphitisiertem Kohlenstoff, und
die Komponente (E-4) mindestens ein Mitglied ist, ausgewählt aus der Gruppe, bestehend aus Aluminiumnitrid, Bornitrid und graphitisiertem Kohlenstoff.

3. Wärmeleitende Silikonzusammensetzung nach Anspruch 1 oder 2, weiter umfassend mindestens ein Element, ausgewählt aus der Gruppe, bestehend aus (A-2) einem Polyorganosiloxan, das in seinem Molekül eine an ein Siliciumatom gebundene Alkenylgruppe aufweist, und (B-2) einem Polyorganohydrogensiloxan, das in seinem Molekül ein an ein Siliciumatom gebundenes Wasserstoffatom aufweist.

4. Wärmeleitende Silikonzusammensetzung nach einem der Ansprüche 1 bis 3, wobei, bezogen auf 100 Masseteile der Komponente (E),
die Menge der Komponente (E-1) 5,0 bis 30,0 Massenteile beträgt,
die Menge der Komponente (E-2) 10,0 bis 28,0 Massenteile beträgt,
die Menge der Komponente (E-3) 15,0 bis 40,0 Massenteile beträgt, und
die Menge der Komponente (E-4) 5,0 bis 40,0 Massenteile beträgt.

5. Gehärtetes Produkt, erhalten durch Härten der wärmeleitenden Silikonzusammensetzung nach einem der Ansprüche 1 bis 4.

6. Elektronisches Bauteil, umfassend die wärmeleitende Silikonzusammensetzung nach einem der Ansprüche 1 bis 4.

## Revendications

1. Composition de silicone thermiquement conductrice comprenant :
(A) un polyorganosiloxane ayant un groupe alkényle lié à un atome de silicium ;
(B) un polyorganohydrogénosiloxane ayant un atome d'hydrogène lié à un atome de silicium ;
(C) un catalyseur de Pt ;
(D) un composé de siloxane représenté par la formule générale suivante (1) : 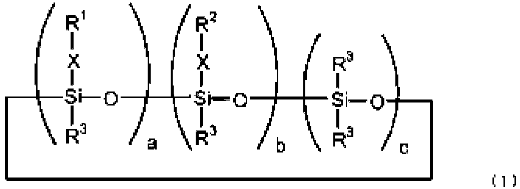
dans laquelle R¹ est un groupe ayant un groupe alcoxysilyle ayant 1 à 4 atomes de carbone,
R² est un groupe organosiloxy linéaire représenté par la formule générale suivante (2) : 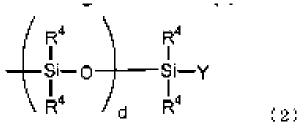
dans laquelle chaque R⁴ est indépendamment un groupe hydrocarbure monovalent ayant 1 à 12 atomes de carbone, Y est un groupe sélectionné parmi le groupe constitué de R⁴ et d'un groupe insaturé aliphatique, et d est un entier de 2 à 60,
chaque X est indépendamment un groupe hydrocarbure divalent ayant 2 à 10 atomes de carbone,
chacun de a et b est indépendamment un entier de 1 ou plus,
c est un entier de 0 ou plus,
dans laquelle a + b + c est un entier de 4 ou plus, et
chaque R³ est indépendamment un groupe hydrocarbure monovalent ayant 1 à 6 atomes de carbone ou un atome d'hydrogène ;
et
(E) une charge thermiquement conductrice,
dans laquelle le composant (A) comprend (A-1) un polyorganosiloxane ayant dans la molécule de celui-ci deux groupes alkényle ou plus liés à un atome de silicium,
dans laquelle le composant (B) comprend (B-1) un polyorganohydrogénosiloxane ayant dans la molécule de celui-ci deux atomes d'hydrogène ou plus liés à un atome de silicium,
dans laquelle le composant (E) comprend :
(E-1) un carbure de silicium ayant un pic de la distribution de taille particulaire dans la plage allant de 10 à 40 µm,
(E-2) une première charge thermiquement conductrice ayant une conductivité thermique de 10 à 300 W/mK et ayant un pic de la distribution de taille particulaire dans la plage allant de 0,1 à 1,0 µm,
(E-3) une deuxième charge thermiquement conductrice ayant une conductivité thermique de 10 à 300 W/mK et ayant un pic de la distribution de taille particulaire dans la plage allant de plus de 1,0 à moins de 10 µm, et
(E-4) une troisième charge thermiquement conductrice (à l'exclusion du carbure de silicium) ayant une conductivité thermique de 60 à 300 W/mK et ayant un pic de la distribution de taille particulaire dans la plage allant de 10 à 40 µm,
dans laquelle la quantité totale des composants (A) à (D) est de 1,0 à 10,0 parties en masse, basée sur 100 parties en masse du composant (E), et
dans laquelle la quantité du composant (E-2) est de 28,0 parties en masse ou moins, basée sur 100 parties en masse du composant (E).

2. Composition de silicone thermiquement conductrice selon la revendication 1, dans laquelle le composant (E-2) est au moins un élément sélectionné parmi le groupe constitué de l'alumine, du nitrure d'aluminium, de l'hydroxyde d'aluminium, de l'oxyde de magnésium, de l'oxyde de zinc, de la silice cristalline, de l'aluminium, du nitrure de bore et du graphite de carbone,
le composant (E-3) est au moins un élément sélectionné parmi le groupe constitué de l'alumine, du nitrure d'aluminium, de l'hydroxyde d'aluminium, de l'oxyde de magnésium, de l'oxyde de zinc, de la silice cristalline, de l'aluminium, du nitrure de bore et du graphite de carbone, et
le composant (E-4) est au moins un élément sélectionné parmi le groupe constitué du nitrure d'aluminium, du nitrure de bore et du graphite de carbone.

3. Composition de silicone thermiquement conductrice selon la revendication 1 ou 2, comprenant en outre au moins un élément sélectionné parmi le groupe constitué de (A-2) un polyorganosiloxane ayant dans la molécule de celui-ci un groupe alkényle lié à un atome de silicium et (B-2) un polyorganohydrogénosiloxane ayant dans la molécule de celui-ci un atome d'hydrogène lié à un atome de silicium.

4. Composition de silicone thermiquement conductrice selon l'une quelconque des revendications 1 à 3, dans laquelle, basée sur 100 parties en masse du composant (E),
la quantité du composant (E-1) est de 5,0 à 30,0 parties en masse,
la quantité du composant (E-2) est de 10,0 à 28,0 parties en masse,
la quantité du composant (E-3) est de 15,0 à 40,0 parties en masse, et
la quantité du composant (E-4) est de 5,0 à 40,0 parties en masse.

5. Produit durci qui est obtenu en durcissant la composition de silicone thermiquement conductrice selon l'une quelconque des revendications 1 à 4.

6. Pièce électronique comprenant la composition de silicone thermiquement conductrice selon l'une quelconque des revendications 1 à 4.
